# FASCICULE DE BREVET EUROPEEN

(11) **EP 2 089 338 B1**
(45) Date de publication et mention de la délivrance du brevet: **20.07.2016**
(21) Numéro de dépôt: 07866484.4
(22) Date de dépôt: 25.10.2007
(51) Int. Cl.: C04B 35/589, C04B 35/80, C04B 35/83, C04B 38/06

(54) **PROCÉDÉ DE FABRICATION D'UNE PIÈCE EN MATÉRIAU COMPOSITE THERMOSTRUCTURAL.**
HERSTELLUNGSVERFAHREN FÜR EIN THERMOSTRUKTURELLES VERBUNDTEIL
PROCESS FOR MANUFACTURING A THERMOSTRUCTURAL COMPOSITE PART

(30) Priorité: 26.10.2006 FR 0654542
(43) Date de publication de la demande: 19.08.2009
(73) Titulaire: HERAKLES, 33185 Le Haillan (FR); CENTRE NATIONAL D'ETUDES SPATIALES, 75001 Paris (FR)
(72) Inventeur: JEHL, Dominique, 68440 Habsheim (FR); PHILIPPE, Eric, 33700 Merignac (FR); LAXAGUE, Michel, F-33160 SAINT MEDARD EN JALLES (FR); DOURGES, Marie-Anne, 33400 Talence (FR)
(74) Mandataire: Desormiere, Pierre-Louis
(86) Numéro de dépôt international: PCT/FR2007/052240
(87) Numéro de publication internationale: WO 2008/050068

(56) Documents cités:
- EP-A- 1 120 484
- EP-A- 1 277 716
- WO-A-01/38625
- GB-A- 2 151 221
- US-A- 3 829 327
- US-A- 5 350 545

## Description

### Arrière-plan de l'invention

La présente invention concerne un procédé de fabrication d'une pièce en matériau composite comportant un renfort fibreux densifié par une matrice.

Le domaine d'application de l'invention concerne plus particulièrement les matériaux composites thermostructuraux, c'est-à-dire des matériaux composites ayant des bonnes propriétés mécaniques et une capacité à conserver ces propriétés à température élevée. Des matériaux composites thermostructuraux typiques sont les matériaux composites carbone/carbone (C/C) formés d'un renfort en fibres de carbone densifié par une matrice en carbone et les matériaux composites à matrice céramique (CMC) formés d'un renfort en fibres réfractaires (carbone ou céramique) densifié par une matrice au moins partiellement céramique. Des exemples de CMC sont les composites C/SiC (renfort en fibres de carbone et matrice en carbure de silicium), les composites C/C-SiC (renfort en fibres de carbone et matrice comprenant une phase carbone, généralement au plus près des fibres, et une phase carbure de silicium) et les composites SiC/SiC (fibres de renfort et matrice en carbure de silicium). Une couche d'interphase peut être interposée entre fibres de renfort et matrice pour améliorer la tenue mécanique du matériau.

La fabrication d'une pièce en matériau composite thermostructural comprend généralement la réalisation d'une préforme fibreuse dont la forme est voisine de celle de la pièce à fabriquer et la densification de la préforme par la matrice.

La préforme fibreuse constitue le renfort de la pièce dont le rôle est essentiel vis-à-vis des propriétés mécaniques. La préforme est obtenue à partir de textures fibreuses : fils, câbles, tresses, tissus, feutres... La mise en forme est réalisée par bobinage, tissage, empilage, et éventuellement aiguilletage de strates bidimensionnelles de tissu ou de nappes de câbles...

La densification de la préforme fibreuse consiste à combler la porosité de la préforme, dans tout ou partie du volume de celle-ci, par le matériau constitutif de la matrice.

La matrice d'un matériau composite thermostructural peut être obtenue suivant différents procédés connus et notamment suivant le procédé par voie liquide et le procédé par voie gazeuse.

Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La transformation du précurseur en phase réfractaire est réalisée par traitement thermique, après élimination du solvant éventuel et réticulation du polymère. Le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

Le procédé par voie gazeuse consiste dans l'infiltration chimique en phase vapeur. La préforme fibreuse est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la matrice par dépôt, au contact des fibres, d'un matériau solide résultant d'une décomposition d'un constituant de la phase gazeuse ou d'une réaction entre plusieurs constituants. A titre d'exemple, des précurseurs gazeux du carbone peuvent être des hydrocarbures donnant le carbone par craquage, tel que le méthane, et un précurseur gazeux de céramique, notamment de SiC, peut être du méthyltrichlorosilane (MTS) donnant du SiC par décomposition du MTS (éventuellement en présence d'hydrogène).

A l'exception des cas où la texture présente déjà le taux de fibres et la géométrie désirés, l'élaboration d'un matériau composite thermostructural avec densification par voie gazeuse débute généralement par une phase dite de consolidation qui permet de figer la forme de la préforme fibreuse ainsi que le taux de fibres du matériau (c'est-à-dire le pourcentage du volume total apparent du matériau effectivement occupé par les fibres).

La consolidation par voie gazeuse présente un certain nombre d'inconvénients. En effet, pour conserver la préforme dans la forme désirée lors de l'infiltration chimique en phase vapeur dans l'étape de consolidation, il est nécessaire de maintenir la préforme dans un outillage en graphite. Les outillages en graphite sont complexes et coûteux à réaliser. En outre, les outillages en graphite vieillissent rapidement du fait qu'ils se densifient en même temps que les préformes qu'ils maintiennent. Enfin, ils occupent une fraction significative du volume utile du four d'infiltration et présentent une inertie thermique importante.

Pour ces raisons, la consolidation de la préforme fibreuse est réalisée de préférence par voie liquide. La texture fibreuse constitutive de la préforme est imprégnée par un précurseur organique de la matrice, puis est mise en forme au moyen d'un outillage (moule ou conformateur) en matériau métallique ou composite qui est réutilisable et qui présente un coût de mise en oeuvre bien plus faible que celui d'un outillage en graphite. Ensuite, le précurseur, éventuellement après séchage et polymérisation, est transformé par traitement thermique afin de laisser, après pyrolyse, un résidu solide qui assure la consolidation de la préforme qui peut être placée telle quelle (i.e. sans outillage de maintien) dans un four d'infiltration pour poursuivre la densification par voie gazeuse.

Toutefois, les caractéristiques thermomécaniques des matériaux composites thermostructuraux consolidés et densifiés par voie gazeuse sont bien supérieures à celles des matériaux composites connus consolidés par voie liquide et densifiés par voie gazeuse. Cette différence de performance s'explique notamment par le fait que, lors d'une consolidation classique par voie liquide, la matrice obtenue par voie liquide se concentre dans les fils du composite et empêche la densification de ces derniers par la matrice obtenue par voie gazeuse lors de l'étape ultérieure de densification. En outre, avec une consolidation par voie liquide, il subsiste toujours une porosité dans les fils en raison du caractère inévitablement incomplet de la transformation du précurseur par voie liquide car le rendement de pyrolyse des précurseurs organiques est toujours inférieur à 100 %. Cette porosité est en général peu accessible en surface des fils et ne peut, par conséquent, être comblée par une voie gazeuse ultérieure. Or, pour obtenir de bonnes caractéristiques mécaniques, il est important de limiter au maximum la porosité hétérogène dans le matériau composite.

Aussi, les caractéristiques thermomécaniques de la matrice obtenue par voie liquide étant généralement inférieures à celles d'une matrice déposée par voie gazeuse, les matériaux composites dont les fils comprennent très majoritairement seulement la matrice obtenue par voie liquide présentent des propriétés thermomécaniques moindres.

Par ailleurs, dans le cas de l'utilisation d'une résine précurseur de carbone (par exemple une résine phénolique) pour la consolidation de matériaux CMC, la cinétique d'oxydation très rapide du coke, obtenue après pyrolyse de cette résine, dégrade la résistance du matériau pour des utilisations longues durées en atmosphère oxydante dès que la température dépasse 400 °C.

Il existe plusieurs possibilités pour améliorer les propriétés thermomécaniques des matériaux CMC consolidés par voie liquide avec une résine précurseur de carbone. Une première possibilité consiste à diminuer le taux de coke présent dans la résine. Une deuxième possibilité est d'utiliser des charges permettant la formation de verre protecteur de l'oxydation.

Cependant, la diminution de la quantité de résine de consolidation pour réduire la proportion de coke est limitée car en dessous d'une certaine quantité de coke l'effet consolidant n'est plus assuré. Par ailleurs, l'utilisation de charges cicatrisantes, c'est-à-dire permettant la formation de verre protecteur de l'oxydation, n'est efficace qu'à partir de la température de formation du verre protecteur par oxydation des charges. Les charges généralement utilisées sont des charges contenant du bore (B₄C, SiB₆, TiB₂, etc.) car elles permettent de former de l'oxyde de bore (B₂O₃) qui est un verre protecteur à bas point de ramollissement. Toutefois, de telles charges ne peuvent générer un effet protecteur qu'au dessus d'une température de 500 °C.

En résumé, si la voie liquide permet de simplifier grandement la mise en oeuvre de la consolidation d'une texture fibreuse par rapport à la voie gazeuse, elle empêche cependant la matrice obtenue par voie

En résumé, si la voie liquide permet de simplifier grandement la mise en oeuvre de la consolidation d'une texture fibreuse par rapport à la voie gazeuse, elle empêche cependant la matrice obtenue par voie gazeuse de se déposer au coeur des fibres lors de la densification ultérieure. En outre, dans le cas de l'utilisation d'une résine à précurseur de carbone, la pyrolyse de la résine laisse un coke résiduel à l'intérieur des fibres qui réduit la résistance mécanique du matériau aux températures élevées et dégrade sa tenue à l'oxydation.

Il existe, par conséquent, un besoin pour obtenir des matériaux composites qui présentent des caractéristiques thermomécaniques améliorées tout en conservant les avantages d'une consolidation par voie liquide.

Le document US 3 829 327 décrit la fabrication d'un tissu pure carbone comprenant la formation d'une feuille à partir de fibres de carbone liées entre elles au moyen d'une solution d'alcool de polyvinylique. La feuille est ensuite imprégnée avec une résine phénolique puis soumise à une carbonisation. Le mat de carbone résultant est ensuite soumis à un dépôt chimique en phase vapeur de carbone.

Le document WO 01/38625 concerne la fabrication d'un bol en matériau composite thermostructural comprenant la formation d'une préforme fibreuse en fibres de carbone, la consolidation de la préforme par voie liquide suivie d'une carbonisation, et la densification de la préforme avec une matrice de carbone pyrolytique déposée par CVI.

Le document GB 2 151 221 divulgue un procédé de fabrication d'une pièce en matériau composite dans lequel une texture en fibres de carbone est soumise aux traitements suivants:
- première imprégnation avec une résine thermodurcissable qui reste déformable après son durcissements,
- durcissement de la résine,
- deuxième imprégnation avec une deuxième résine thermodurcissable contenant du bore,
- durcissement deuxième résine,
- carbonisation résines,
- densification avec du carbone pyrolytique par CVD,
- dépôt de carbone en phase gazeuse.

### Objet et résumé de l'invention

La présente invention a pour but de proposer un procédé de fabrication d'une pièce en matériau composite qui permet de concentrer la matrice obtenue par voie liquide à l'extérieur des fils lors de la consolidation de la préforme afin d'améliorer les caractéristiques thermomécaniques des pièces en matériau composite dont la préforme fibreuse est consolidée par voie liquide.

A cet effet, l'invention propose un procédé de fabrication selon la revendication 1.

L'étape de comblement de la porosité des fils réalisée préalablement à l'imprégnation de la texture par la composition de consolidation permet de "délocaliser" cette composition à l'extérieur des fils et d'empêcher la formation de la matrice obtenue par voie liquide à l'intérieur des fils.

L'imprégnation des fils par la composition de comblement peut être réalisée sur la texture fibreuse avant sa mise en forme pour obtenir la préforme fibreuse ou après cette mise en forme. Dans le premier cas, l'imprégnation par la composition de consolidation peut aussi être réalisée avant mise en forme de la texture fibreuse ou après cette mise en forme.

L'imprégnation des fils peut également se faire avant la formation de la texture fibreuse, c'est-à-dire en imprégnant chacun des fils séparément avec la composition de comblement puis en tissant la texture avec ces fils.

La composition liquide de comblement peut être éliminée avant l'étape de densification par voie gazeuse pour permettre à la matrice obtenue par cette voie de se déposer au coeur des fils de la préforme, ou bien être conservée tout au long du procédé de fabrication, la nature de la composition de comblement étant alors choisie pour former un matériau ne dégradant pas les performances thermomécaniques.

Dans le premier cas, la composition de comblement peut contenir une résine fugitive qui sera éliminée de la porosité des fils lors du traitement thermique de transformation du précurseur de matière consolidante de manière à rouvrir l'accès à l'intérieur des fils avant la densification par voie gazeuse.

Pour assurer une bonne délocalisation de la composition liquide de consolidation à l'extérieur des fils de la texture, la résine fugitive est de préférence non miscible avec la composition liquide de consolidation. La résine fugitive est choisie notamment parmi des huiles de silicone, un acétate de polyvinyle et des résines thermoplastiques.

La préforme peut être réalisée à partir d'une texture fibreuse en fibres de carbone ou de céramique et le précurseur de matière consolidante de la composition liquide de consolidation peut être une résine choisie parmi les résines précurseurs de carbone et les résines précurseurs de céramique.

Lorsque la préforme fibreuse est réalisée à partir d'une texture fibreuse en fibres de céramique consolidée par voie liquide avec une résine précurseur de céramique, la composition de comblement peut contenir une résine précurseur de carbone, le coke de résine résultant dans les fils après pyrolyse étant éliminé par une oxydation ménagée de la préforme. De cette manière, la porosité des fils de la texture est provisoirement comblée lors de l'imprégnation de la texture avec la résine de consolidation précurseur de céramique puis rouverte par l'oxydation ménagée avant la densification pour permettre la formation de la matrice voie gazeuse à l'intérieur des fils.

La polymérisation de la résine précurseur de carbone peut être réalisée avant l'imprégnation de la texture fibreuse avec la résine de consolidation précurseur de céramique. Elle peut être également réalisée ultérieurement, c'est-à-dire en même temps que la polymérisation de la résine de consolidation.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est un ordinogramme illustrant des étapes successives d'un mode de mise en oeuvre d'un procédé conforme à l'invention,
- les figures 2 et 3 sont des microphotographies montrant un matériau composite obtenu conformément à un procédé de l'invention,
- les figures 4 et 5 sont des microphotographies montrant un matériau obtenu suivant un procédé de l'art antérieur,
- les figures 6 et 7 sont des ordinogrammes illustrant des étapes successives d'autres modes de mise en oeuvre d'un procédé conforme à l'invention.

### Description détaillée de modes de réalisation

La présente invention propose une méthode de fabrication d'une pièce en matériau composite thermostructural dans laquelle la matrice de consolidation obtenue par voie liquide avant l'étape de densification par voie gazeuse est "délocalisée" à l'extérieur des fils de la texture fibreuse de la préforme par un comblement préalable de la porosité de ces derniers (espaces intra-fils) avec une composition de comblement.

Plus précisément, la texture fibreuse utilisée comprend une pluralité de fils (pouvant dans certains cas être regroupés dans des câbles). Chaque fil est constitué d'une pluralité de fibres et/ou de filaments entre lesquels il existe des espaces dénommés "espaces intra-fils". Les espaces intra-fils forment la porosité à l'intérieur des fils. Par ailleurs, à une échelle plus grande, il existe également au sein de la structure fibreuse des espaces entre les fils eux-mêmes qu'on appelle "espaces inter-fils". Dans la présente invention, la composition de comblement est destinée à remplir préalablement les espaces intra-fils pour permettre le dépôt de la matrice de consolidation par voie liquide seulement au niveau des espaces inter-fils.

La quantité de composition de comblement doit être choisie de manière à permettre seulement le comblement des espaces intra-fils (porosité des fils). Elle doit être suffisante pour assurer le remplissage de tous les espaces intra-fils. La quantité de la composition utilisée pour réaliser ce comblement doit être notamment supérieure à la quantité utilisée lorsque l'on cherche seulement à lier les fibres entre elles, car dans ce cas la composition utilisée comme liant n'a besoin d'être présente qu'au niveau des portions de contact entre les fibres. En outre, la quantité de composition de comblement doit être ajustée pour ne pas déborder à l'extérieur des fils et occuper les espaces inter-fils présents entre les fils de la texture.

Conformément à l'invention, la composition de comblement, qui peut être liquide ou solide, est introduite à l'intérieur des fils de la texture fibreuse avant l'imprégnation de cette dernière avec la composition liquide de consolidation contenant un précurseur de matière consolidante correspondant à la matrice de consolidation.

Selon une première approche, la composition de comblement ou la matière résultante de cette composition est éliminée avant l'étape de densification de la préforme fibreuse par voie gazeuse de manière à rouvrir la porosité au sein des fils et permettre la pénétration à l'intérieur de ceux-ci de la matrice déposée par voie gazeuse lors de la densification de la préforme. Ainsi, même en utilisant la voie liquide pour la consolidation, on obtient des matériaux composites présentant des caractéristiques thermomécaniques améliorées proches de celles d'un matériau consolidé par voie gazeuse puisque la matrice déposée par voie gazeuse lors de la densification est également présente à l'intérieur des fils de la préforme et non plus seulement à l'extérieur de ces derniers comme c'est le cas habituellement lors d'une consolidation par voie liquide suivie d'une densification par voie gazeuse d'une préforme fibreuse.

Selon une deuxième approche, avant l'imprégnation de la texture fibreuse avec une composition liquide de consolidation contenant un précurseur de carbone, la porosité des fils de la texture est comblée avec une composition liquide contenant une résine dont la matière obtenue après pyrolyse (pyrolysat) présente des caractéristiques améliorées par rapport à celles du carbone. Ce pyrolysat doit en particulier être non oxydable. Cette deuxième approche permet d'avoir une matière non oxydable à coeur des fils qui présentent, par conséquent, des caractéristiques améliorées par rapport à des fils contenant à coeur du carbone (coke de résine) comme c'est le cas habituellement lors d'une consolidation par voie liquide avec une résine précurseur de carbone. Dans ce cas, on obtient également des matériaux composites présentant des caractéristiques thermomécaniques améliorées puisque la résine génératrice de carbone après pyrolyse est maintenue à l'extérieur des fils. Grâce à ce comblement préalable des fils de la texture fibreuse avant son imprégnation par la composition de consolidation, la mise en oeuvre de procédés particuliers pour réduire le taux de coke de résine ou l'utilisation de charges permettant la formation de verre protecteur de l'oxydation n'est plus nécessaire. Il est ainsi possible d'utiliser tout type de résine organique pour la consolidation par voie liquide sans restriction sur le taux de coke qu'il peut en résulter.

L'imprégnation des fils par la composition de comblement peut être réalisée sur la texture fibreuse directement ou avant, c'est-à-dire en imprégnant chacun des fils séparément avec la composition de comblement puis en tissant la texture avec ces fils.

Dans le cas où la composition de comblement ou la matière résultante de cette composition est éliminée avant l'étape de densification de la préforme fibreuse par voie gazeuse, la composition de comblement peut être une composition liquide telle qu'une résine fugitive ou une composition solide sous forme de fils thermoplastiques mélangés avec des fils C ou SiC, les fils thermoplastiques étant ensuite éliminés lors du traitement thermique de transformation du précurseur.

En outre de l'étape de comblement des porosités des fils de la texture fibreuse, le procédé de fabrication d'une pièce en matériau composite conforme à l'invention comprend les étapes bien connues de préparation d'une texture fibreuse de renfort, mise en forme et consolidation de la texture par voie liquide, pour obtenir une préforme consolidée, et densification de la préforme par voie gazeuse.

La texture fibreuse de départ peut être en fibres de diverses natures, en particulier des fibres de carbone ou de céramique (par exemple carbure de silicium). En vue de la mise en forme par voie liquide, la texture se présente avantageusement sous forme de strates bidimensionnelles, par exemple des couches de tissu ou tricot, des nappes de fils ou de câbles, etc., qui peuvent être liées entre elles par aiguilletage ou par couture, ou être assemblées par un feutre. La texture peut encore être formée par tissage, tressage ou tricotage tridimensionnel de fils, ou tout autre technique connue. Les couches de tissu peuvent être formées de fils réalisés à partir de filaments continus ou discontinus.

La consolidation par voie liquide est, de façon bien connue en soi, réalisée par imprégnation de la texture fibreuse par un précurseur organique du matériau désiré pour la première phase de matrice assurant la consolidation. Il peut s'agir de précurseurs de carbone (résine phénolique, résine furanique, du brai, etc.) ou de précurseurs de céramique tels que les polysilanes ou polysilazanes précurseurs de carbure de silicium, les polycarbosilanes ou autres précurseurs tels qu'obtenus par voie sol/gel, sels dissous...

La mise en forme de la texture fibreuse est réalisée généralement par moulage avant ou après l'imprégnation de la texture fibreuse avec la composition de consolidation.

La texture fibreuse imprégnée est polymérisée, généralement à une température inférieure à 200 °C. A ce stade, la texture mise en forme est soumise à un traitement thermique pour transformer le précurseur par pyrolyse. Ce dernier traitement est réalisé à une température généralement comprise entre 500 °C et 2 800 °C, selon la nature du précurseur, la texture étant éventuellement maintenue dans le moule pour éviter des déformations.

La densification par voie gazeuse est réalisée par infiltration chimique en phase vapeur, sans outillage de maintien dans un four d'infiltration dans lequel est admise une phase gazeuse contenant généralement des précurseurs gazeux de carbone ou de céramique, notamment de carbure de silicium (SiC). Les techniques de formation de matrices par voie gazeuse sont bien connues.

La densification par voie gazeuse peut éventuellement débuter par une étape de dépôt d'une couche d'interphase comme décrit dans les documents US 4 752 503 et US 5 486 379.

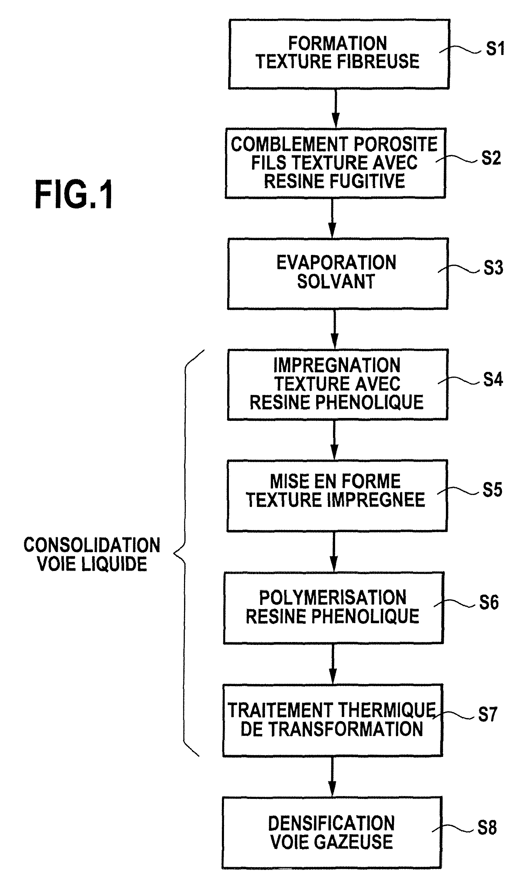

En référence à la figure 1, on décrit un mode de mise en oeuvre d'un procédé pour la fabrication d'une pièce en matériau composite thermostructural conforme à l'invention dans lequel la porosité des fils de la texture est préalablement comblée avec une résine fugitive, c'est-à-dire avec une résine qui, après pyrolyse, disparaît en laissant un faible résidu de carbone (coke de résine) au moins inférieur à 10% en masse et de préférence inférieur à 5 % en masse.

La première étape (étape S1) consiste à former une texture fibreuse à partir de fibres de carbone ou de céramique (par exemple SiC).

On procède ensuite à l'étape de comblement de la porosité des fils de la texture fibreuse en imprégnant celle-ci avec une résine fugitive. Dans l'exemple décrit présentement, on imprègne la texture avec de l'huile de silicone diluée dans un solvant (étape S2).

Dans ce mode de réalisation, le but poursuivi est de remplir la porosité des fils de la texture fibreuse par une résine qui, une fois pyrolysée, ne laissera pas, ou quasiment pas, de résidus. La résine utilisée pour ce comblement doit rester au sein des fils jusqu'à la fin de la polymérisation de la résine de consolidation. A cet effet, la résine de comblement ne doit pas être miscible ni avec la résine de consolidation, ni avec les éventuels solvants qui peuvent être utilisés lors de l'imprégnation de la texture fibreuse avec la résine de consolidation.

La quantité de résine fugitive utilisée pour le comblement doit être choisie de manière à permettre seulement le comblement des espaces intra-fils (porosité des fils), c'est-à-dire sans déborder à l'extérieur des fils pour ne pas occuper les espaces inter-fils présents entre les fils de la texture. Ces espaces inter-fils seront remplis avec la résine de consolidation.

Après imprégnation des fils de la texture fibreuse avec l'huile de silicone, le solvant est évaporé (étape S3), ce qui a pour effet de concentrer l'huile de silicone dans les fils. A ce stade, la texture fibreuse reste souple et est imprégnée avec une composition liquide de consolidation, ici une résine phénolique éventuellement diluée dans un solvant, par exemple de l'alcool éthylique (étape S4). Après les étapes éventuelles d'évaporation du solvant et de pré-polymérisation (pré-poussage), la texture fibreuse imprégnée est mise en forme par moulage (étape S5) et la résine phénolique est polymérisée (étape S6). La texture est alors soumise à un traitement thermique pour transformer la résine phénolique par pyrolyse en résidus solides de carbone (coke de résine) qui permettent de consolider la texture et d'obtenir une préforme fibreuse qui se tient (préforme autoporteuse) (étape S7).

La mise en forme de la texture fibreuse (étape S5) peut être également réalisée avant ou après l'imprégnation de la texture avec de la composition liquide de comblement (étape S2), avant ou après l'évaporation du solvant de la composition de comblement (étape S3), ou encore avant l'imprégnation avec la composition liquide de consolidation (étape S4).

Au cours de la pyrolyse, l'huile de silicone présente à l'intérieur des fils se transforme en composants volatils qui sont évacués à l'extérieur de la texture tandis que la résine phénolique se cokéfie.

A ce stade du procédé, la préforme est suffisamment rigide pour être placée dans un four de densification par infiltration chimique en phase vapeur (CVI) sans recourir à des outillages (étape S8). Suivant la nature de la phase gazeuse introduite dans le four, une matrice carbone ou céramique est formée au sein de la texture fibreuse. La porosité interne des fils ayant été rouverte par l'élimination de l'huile de silicone lors du traitement thermique, la phase gazeuse pénètre à la fois dans les espaces inter-fils et dans la porosité des fils, ce qui permet de former une matrice par voie gazeuse aussi bien en dehors qu'à l'intérieur des fils de la préforme.

Les propriétés thermomécaniques de la pièce en matériau composite ainsi réalisée sont supérieures à celles d'une pièce réalisée de façon similaire mais sans comblement préalable de la porosité des fils avec une résine fugitive. En effet, on peut vérifier que les fils de la pièce fabriquée conformément au procédé de l'invention présentent un taux de coke très faible et sont densifiés essentiellement par la matrice obtenue par voie gazeuse.

Cette délocalisation de la matrice voie liquide à l'extérieur des fils peut être également obtenue en remplaçant l'huile de silicone par de l'acétate de polyvinyle (PVA) ou une résine thermoplastique du type polyméthylméthacrylate (PMMA) par exemple. Dans ces cas, contrairement à la texture imprégnée avec de l'huile de silicone, la texture fibreuse devient rigide avant l'imprégnation de la résine phénolique si bien qu'il faut mettre en forme la texture en même temps qu'on l'imprègne avec le PVA ou la résine thermoplastique.

D'autres résines de consolidation peuvent être également utilisées à la place de la résine phénolique. Des résines précurseurs de carbone, telle qu'une résine furanique ou du brai, ou des résines précurseur de céramique, telles que des résines polycarbosilazane, polycarbosilane ou polysiloxane, peuvent être également utilisées en fonction des caractéristiques du matériau que l'on souhaite obtenir.

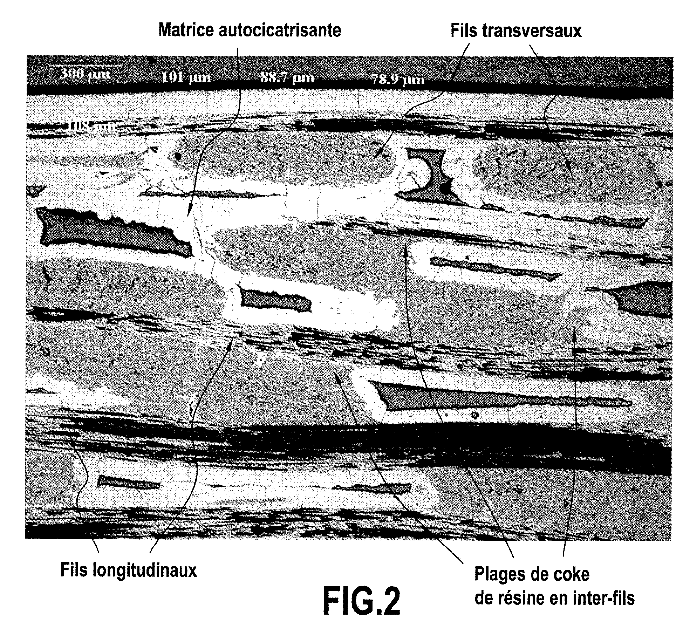

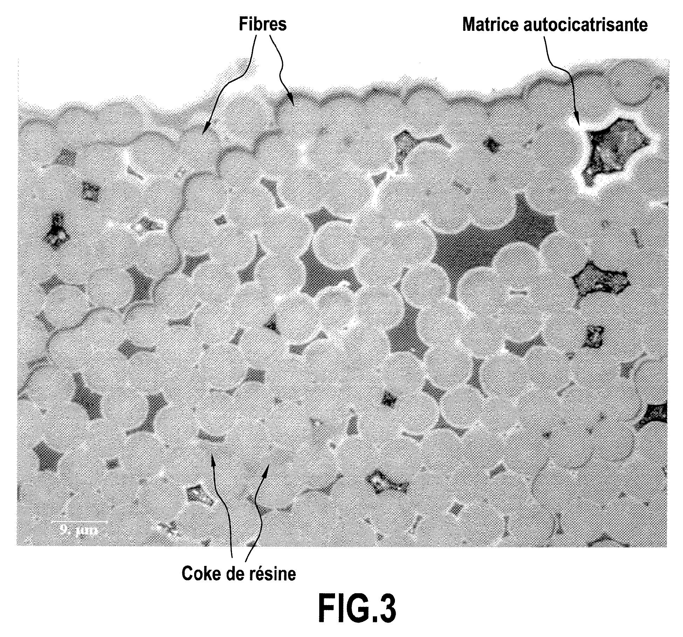

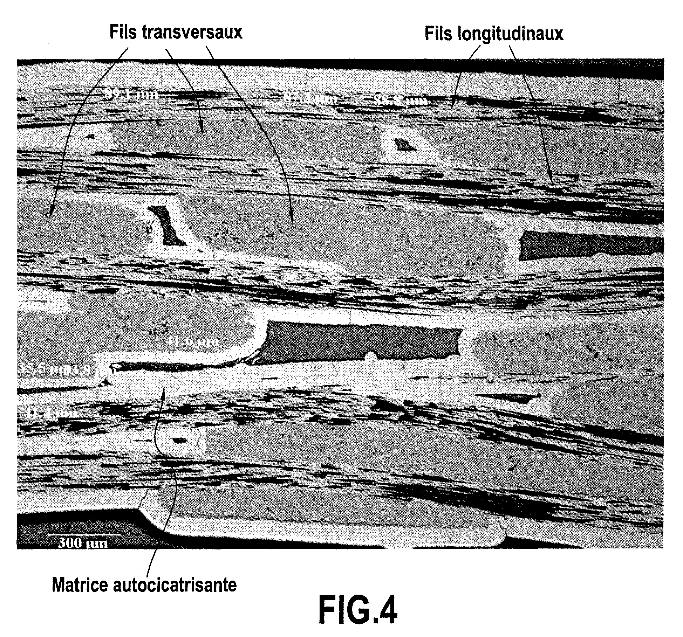

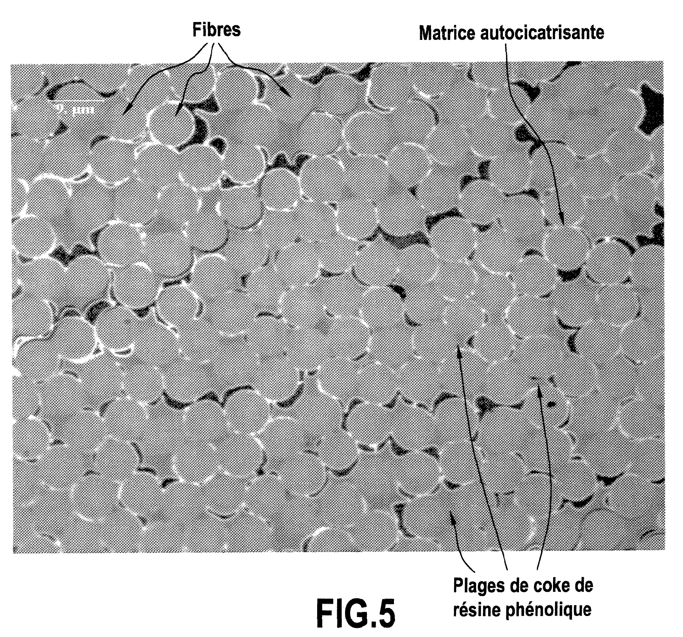

Les figures 2 et 3 montrent respectivement le résultat obtenu dans les espaces inter-fils et dans les espaces intra-fils lorsque la porosité des fils de la texture fibreuse est préalablement comblée avec une résine fugitive comme décrit précédemment tandis que les figures 4 et 5 montrent respectivement le résultat obtenu dans les espaces inter-fils et dans les espaces intra-fils sans comblement préalable de la porosité des fils.

Le matériau composite des figures 2 à 5 est un matériau C/C réalisé dans les conditions suivantes:
- formation texture fibreuse par réalisation d'une structure multicouche de tissage tridimensionnel de fibres de carbone (tissu Guipex™ par exemple),
- consolidation voie liquide par imprégnation de la texture dans un bain de résine phénolique/alcool éthylique (60 %/40 %) ("trempage" puis égouttage), évaporation du solvant et pré-polymérisation (pré-poussage) à l'étuve à 90 °C, moulage sous presse à l'épaisseur désirée avec reprise en masse de 24 %, et carbonisation à une température d'environ 800 °C pour transformer la résine phénolique en coke de résine,
- densification voie gazeuse (CVI) par une matrice autocicatrisante (SiC) jusqu'à l'obtention d'une densité supérieure à 2.

Pour le matériau des figures 2 et 3, la texture fibreuse est en outre préalablement imprégnée avec une résine fugitive dans les conditions suivantes:
- Préparation d'une solution acétate de polyvinyle (PVA)/eau (15 %/85 %),
- Imprégnation de strates de tissage tridimensionnel de fibres de carbone avec la solution PVA/eau par "trempage" puis égouttage,
- Evaporation de l'eau dans une étuve à 30 °C pendant 5 heures,
- Moulage sous presse à l'épaisseur désirée avec reprise de masse de 22 %.

La résine PVA est éliminée lors de la carbonisation.

Sur la figure 2 (microphotographie du matériau obtenu avec pré-imprégnation texture fibreuse avec résine fugitive), on observe la présence de plages de coke de résine dans les espaces inter-fils alors que sur la figure 4 (microphotographie du matériau obtenu sans pré-imprégnation texture fibreuse avec résine fugitive), on constate l'absence de coke entre les fils. Cette absence de coke de résine dans les espaces inter-fils est due au fait que sans le comblement préalable des fils de la texture fibreuse, la résine phénolique pénètre majoritairement dans les fils de la texture, ce qui conduit à la présence d'un taux de coke de résine phénolique important dans les fils après la carbonisation comme le montre la figure 5.

Au contraire, lorsque les fils de la texture sont préalablement comblés avec la résine PVA, on constate qu'il y a très peu de coke de résine phénolique dans les fils comme le montre la figure 3. La résine phénolique, qui n'a pu pénétrer dans les fils de la texture, est concentrée dans les espaces inter-fils dans lesquels elle forme des plages de coke de résine favorisant la liaison entre les fils (figure 2).

En outre, en comparant le matériau des figures 3 et 5, on constate que la matrice autocicatrisante déposée par infiltration chimique en phase vapeur est répartie de façon plus homogène dans les fils ayant été préalablement comblés par la résine PVA (figure 3) que dans les fils n'ayant pas été comblés (figure 5). En effet, avec une imprégnation préalable des fils avec une résine fugitive, leur porosité est rouverte avant l'infiltration chimique en phase vapeur lors de la carbonisation tandis que, sans cette imprégnation préalable, une grande partie de la porosité des fils est bouchée par le coke de résine formé lors de la carbonisation.

Les résultats d'essais mécaniques en traction à température ambiante sur le matériau obtenu avec et sans pré-imprégnation des fils avec la résine PVA sont donnés au tableau I ci-dessous.

**Tableau I**

| (essai en traction) | | | |
|---|---|---|---|
| Matériau | σr (MPa) | εr (%) | E (GPa) |
| avec étape PVA | 296 | 0.61 | 78 |
| sans étape PVA | 260 | 0.62 | 75 |

Les résultats obtenus montrent que le comblement préalable des fils de la texture fibreuse avec une résine fugitive permet d'améliorer les propriétés mécaniques du matériau.

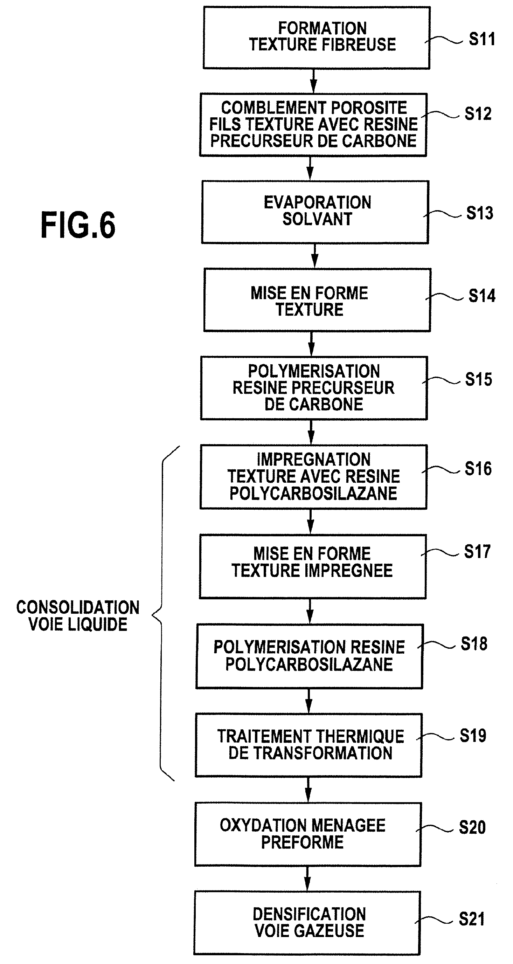

La figure 6 montre un autre mode de mise en oeuvre d'un procédé conforme à l'invention qui diffère de celui décrit en relation avec la figure 1 en ce qu'on utilise, d'une part, une résine précurseur de carbone à la place d'une résine fugitive pour le comblement de la porosité des fils de la texture et, d'autre part, une résine précurseur de céramique à la place d'une résine précurseur de carbone pour la consolidation par voie liquide.

La première étape (étape S11) consiste à former une texture fibreuse à partir de fibres de céramique (par exemple SiC).

On procède ensuite à l'étape de comblement de la porosité des fils de la texture fibreuse en imprégnant celle-ci avec une composition liquide contenant un précurseur de carbone, ici une résine phénolique diluée dans un solvant (ex. alcool éthylique) (étape S12). La quantité de résine phénolique utilisée pour le comblement doit être choisie de manière à permettre seulement le comblement des espaces intra-fils (porosité des fils) sans occuper les espaces inter-fils présents entre les fils de la texture.

Après imprégnation des fils de la texture fibreuse avec la composition de comblement, le solvant est évaporé (étape S13), ce qui a pour effet de concentrer la résine phénolique dans les fils. La texture fibreuse est mise en forme par moulage (étape S14) et la résine phénolique est polymérisée (étape S15). La mise en forme de la texture fibreuse peut aussi être réalisée avant l'imprégnation de la texture avec la résine phénolique (étape S12) ou avant l'évaporation du solvant de la composition de comblement (étape S13)

La texture est ensuite imprégnée avec une composition liquide de consolidation contenant un précurseur de céramique, ici une résine polycarbosilazane éventuellement diluée dans un solvant (étape S16). Après les étapes éventuelles d'évaporation du solvant et de pré-polymérisation (pré-poussage), la texture fibreuse imprégnée est à nouveau mise en forme par moulage (étape S17) et la résine polycarbosilazane est polymérisée (étape S18). La texture est alors soumise à un traitement thermique pour transformer par pyrolyse la résine phénolique en résidus solides de carbone (coke de résine phénolique) et la résine polycarbosilazane en une céramique SiCN (étape S19), ce qui permet d'obtenir une préforme fibreuse consolidée.

Après cette étape de pyrolyse, la préforme subit une oxydation ménagée à 450°C environ pour éliminer le carbone (coke de résine phénolique) sans dégradation des fils de la préforme et de la céramique de consolidation (étape S20).

A ce stade du procédé, la préforme est suffisamment rigide pour être placée sans outillage dans un four de densification par infiltration chimique en phase vapeur (CVI) dans lequel est admise une phase gazeuse précurseur de céramique (SiC) (étape S21) qui peut être éventuellement précédée d'un dépôt CVI d'une couche d'interphase pour protéger les fibres mises à nu comme décrit dans les documents US 4 752 503 et US 5 486 379. La porosité des fils ayant été rouverte par l'oxydation du coke de résine, la phase gazeuse pénètre à la fois dans les espaces inter-fils et dans la porosité des fils, ce qui permet de former une matrice par voie gazeuse aussi bien en dehors qu'à l'intérieur des fils de la préforme et d'obtenir une pièce en matériau composite ayant des propriétés thermomécaniques proches de celles d'une pièce consolidée par voie gazeuse. En effet, on peut vérifier que les fils de la pièce fabriquée conformément au procédé de l'invention ne contiennent pas de coke et sont densifiés par la matrice obtenue par voie gazeuse. La céramique SiCN résultante de la pyrolyse de la résine polycarbosilazane est concentrée dans les espaces inter-fils.

Selon une variante de mise en oeuvre, la texture fibreuse peut être imprégnée avec la résine polycarbosilazane immédiatement après l'imprégnation avec la résine phénolique (ou après pré-poussage) de manière à disposer lors de la consolidation d'une texture fibreuse encore souple et à ne réaliser qu'une seule étape de mise en forme par moulage.

La résine phénolique utilisée pour le comblement de la porosité des fils peut être remplacée par une résine furanique ou du brai par exemple, tandis que la résine polycarbosilazane utilisée pour la consolidation peut être remplacée par une résine polycarbosilane ou polysiloxane par exemple.

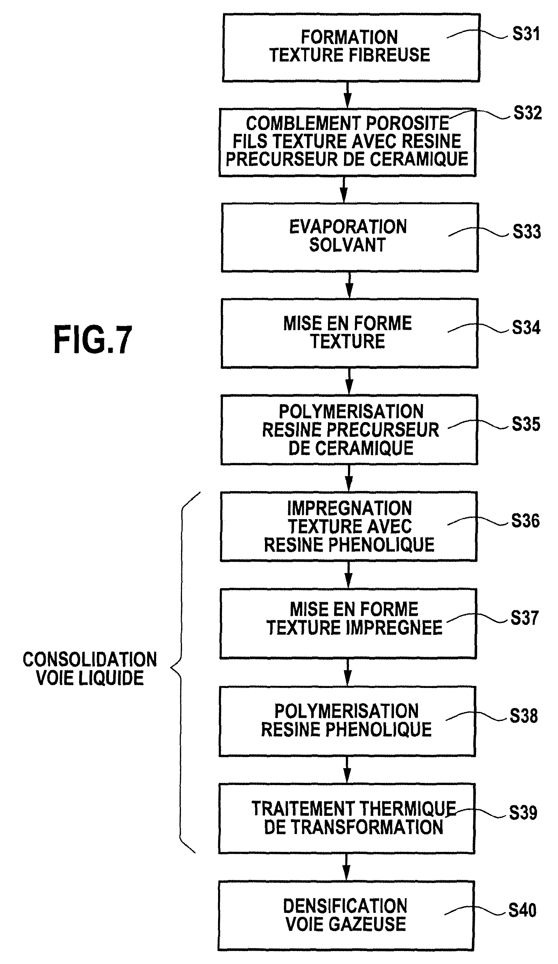

On décrit maintenant en référence à la figure 7, un mode de mise en oeuvre d'un procédé de fabrication d'une pièce en matériau composite conforme à l'invention dans lequel la porosité des fils de la texture est comblée avec une composition liquide contenant une résine dont le pyrolysat présente des caractéristiques améliorées par rapport à un coke de résine et en particulier celle d'être non oxydable. Dans l'exemple décrit ici, la composition liquide de comblement est une résine précurseur de céramique SiC comme par exemple une résine polycarbosilazane.

La première étape (étape S31) consiste à former une texture fibreuse à partir de fibres de carbone (ou éventuellement de céramique).

On procède ensuite à l'étape de comblement de la porosité des fils de la texture fibreuse en imprégnant celle-ci avec une résine polycarbosilazane diluée dans un solvant (étape S32). La quantité de résine polycarbosilazane utilisée pour le comblement doit être choisie de manière à permettre seulement le comblement des espaces intra-fils (porosité interne des fils), c'est-à-dire sans déborder à l'extérieur des fils pour ne pas occuper les espaces inter-fils présents entre les fils de la texture. Ces espaces inter-fils seront remplis ultérieurement avec la résine de consolidation.

Après imprégnation des fils de la texture fibreuse avec la résine polycarbosilazane, le solvant est évaporé (étape S33), ce qui a pour effet de concentrer la résine polycarbosilazane dans les fils. La texture fibreuse est mise en forme par moulage (étape S34) et la résine polycarbosilazane est polymérisée (étape S35). La mise en forme de la texture fibreuse peut aussi être réalisée avant l'imprégnation de la texture avec la composition liquide de comblement (étape S32) ou avant l'évaporation du solvant de la composition de comblement (étape S33).

La texture est ensuite imprégnée avec une composition liquide de consolidation, ici une résine phénolique éventuellement diluée dans un solvant (étape S36). Après les étapes éventuelles d'évaporation du solvant et de pré-polymérisation (pré-poussage), la texture fibreuse imprégnée est à nouveau mise en forme par moulage (étape S37) et la résine phénolique est polymérisée (étape S38). La texture est alors soumise à un traitement thermique pour transformer par pyrolyse la résine polycarbosilazane en une céramique SiCN et la résine phénolique en résidus solides de carbone (coke de résine) (étape S39), ce qui permet d'obtenir une préforme fibreuse consolidée. La formation de la céramique SiCN par pyrolyse de la résine polycarbosilazane s'accompagne d'un retrait de matière qui rouvre partiellement la porosité des fils pour la densification par voie gazeuse ultérieure.

A ce stade du procédé, la préforme est suffisamment rigide pour être placée sans outillage dans un four de densification par infiltration chimique en phase vapeur (CVI) dans lequel est admise une phase gazeuse précurseur de céramique (SiC) ou de carbone (pyrocarbone) (étape S40) éventuellement précédée du dépôt CVI d'une couche d'interphase comme décrit dans les documents US 4 752 503 et US 5 486 379. La porosité interne des fils étant remplie par la céramique SiCN, il n'y a que très peu de coke de résine à l'intérieur des fils, ces derniers étant densifiés par la matrice céramique SiCN et par la matrice obtenue par voir gazeuse, ce qui permet d'obtenir une pièce en matériau composite ayant des propriétés thermomécaniques supérieures à celles d'une pièce dont les fils de la préforme n'ont pas été comblés préalablement avec une résine précurseur de céramique.

Selon une variante de mise en oeuvre, la texture fibreuse peut être imprégnée avec la résine phénolique immédiatement après l'imprégnation avec la résine polycarbosilazane de manière à disposer lors de la consolidation d'une texture fibreuse encore souple et de ne réaliser qu'une seule étape de mise en forme par moulage.

La résine polycarbosilazane utilisée pour le comblement de la porosité des fils peut être remplacée par une résine polycarbosilane ou polysiloxane par exemple tandis que la résine phénolique utilisée pour la consolidation peut être remplacée par une résine furanique ou du brai par exemple.

Dans l'exemple suivant, deux matériaux composites C/C ont été réalisés : une éprouvette A et une éprouvette B réalisées dans les conditions suivantes :
- formation texture fibreuse par réalisation d'une structure multicouche de tissage tridimensionnel de fibres de carbone (tissu Guipex™ par exemple),
- consolidation voie liquide par imprégnation de la texture dans un bain de résine phénolique chauffée à 80 °C ("trempage" puis égouttage), moulage sous poche à vide avec reprise en masse de 21 %, et carbonisation à une température d'environ 800 °C pour transformer la résine phénolique en coke de résine,
- densification voie gazeuse (CVI) par une matrice autocicatrisante (SiC) jusqu'à l'obtention d'une densité supérieure à 2.

Par ailleurs, la texture fibreuse de l'éprouvette A a été en outre préalablement imprégnée avec une résine précurseur de céramique dans les conditions suivantes:
- imprégnation de strates de tissage tridimensionnel de fibres de carbone avec une résine précéramique polysilazane (résine KiON VL 20®) par "trempage" puis égouttage,
- moulage sous poche à vide avec reprise de masse de 30 %.

Les résultats d'essais mécaniques en traction à température ambiante sur les éprouvettes A et B sont donnés au tableau II ci-dessous.

**Tableau II**

| (essai en traction) | | | |
|---|---|---|---|
| Matériau | σr (MPa) | εr (%) | E (GPa) |
| Eprouvette A | 260 | 0.76 | 95 |
| Eprouvette B | 220 | 0.55 | 90 |

Les résultats obtenus montrent clairement que le comblement préalable des fils de la texture fibreuse avec une résine précurseur de céramique permet d'atteindre des propriétés mécaniques légèrement améliorées par rapport à celles obtenues sans ce comblement.

Les résultats d'essais en durée de vie en fatigue traction (traction à 0.25 Hz) sur les éprouvettes A et B sont donnés au tableau III ci-dessous.

**Tableau III**

| (essai en durée de vie (DDV)) | | | |
|---|---|---|---|
| Matériau | σr (MPa) | θ (°C) | DDV (h) |
| Eprouvette A | 120 | 600 | 70 |
| Eprouvette B | 120 | 600 | 3 |

Les résultats obtenus montrent une nette amélioration de la durée de vie lorsque que les fils de la texture fibreuse sont préalablement comblés avec une résine précurseur de céramique.

## Revendications

1. Procédé de fabrication d'une pièce en matériau composite comprenant un renfort fibreux densifié par une matrice, ledit procédé comportant les étapes de :
- réalisation d'une préforme fibreuse consolidée par imprégnation d'une texture fibreuse comprenant des fils au moyen d'une composition liquide de consolidation contenant un précurseur d'une matière consolidante et transformation, par pyrolyse, du précurseur en matière consolidante afin d'obtenir une préforme consolidée maintenue en forme, et
- densification de la préforme fibreuse consolidée par infiltration chimique en phase vapeur,
**caractérisé en ce que** la texture fibreuse comprend une pluralité de fils, chaque fil étant constitué d'une pluralité de fibres ou de filaments entre lesquels des espaces intra-fils sont présents et **en ce que** ledit procédé comprend, avant l'imprégnation de la texture fibreuse avec la composition liquide de consolidation, une étape de comblement des espaces intra-fils dans ladite texture au moyen d'une composition liquide de comblement, la composition liquide de comblement étant éliminée avant l'étape de densification de la préforme fibreuse par infiltration chimique en phase vapeur.

2. Procédé selon la revendication 1, **caractérisé en ce que** la composition liquide de comblement contient une résine fugitive.

3. Procédé selon la revendication 2, **caractérisé en ce que** la résine fugitive est non miscible avec la composition liquide de consolidation.

4. Procédé selon la revendication 2 ou 3, **caractérisé en ce que** la résine fugitive est choisie parmi des huiles de silicone, un acétate de polyvinyle et des résines thermoplastiques.

5. Procédé selon l'une quelconque des revendications 1 à 4, **caractérisé en ce que** la préforme est réalisée à partir d'une texture fibreuse en fibres de carbone ou de céramique et **en ce que** le précurseur de matière consolidante de la composition liquide de consolidation est une résine choisie parmi les résines précurseurs de carbone et les résines précurseurs de céramique.

6. Procédé selon la revendication 1, **caractérisé en ce que** la préforme fibreuse est réalisée à partir d'une texture fibreuse en fibres de céramique et **en ce que** la composition liquide de comblement contient une résine précurseur de carbone, ladite préforme étant oxydée après la pyrolyse pour éliminer le coke de la résine précurseur de carbone.

7. Procédé selon la revendication 6, **caractérisé en ce que** le précurseur de matière consolidante de la composition liquide de consolidation est une résine précurseur de céramique.

8. Procédé selon la revendication 7, **caractérisé en ce que** la résine précurseur de céramique de la composition liquide de consolidation est une résine choisie parmi la résine polycarbosilazane, la résine polycarbosilane et la résine polysiloxane.

9. Procédé selon l'une quelconque des revendications 6 à 8, **caractérisé en ce qu'**il comprend, avant l'imprégnation de la texture fibreuse avec la composition liquide de consolidation, une étape de polymérisation de la résine précurseur de carbone.

## Patentansprüche

1. Verfahren zur Herstellung eines Teils aus Verbundwerkstoff, das eine durch eine Matrix verdichtete Faserverstärkung umfasst, wobei das Verfahren die Schritte umfasst des:
- Ausbildens eines Faservorformlings, der durch Imprägnierung einer Fäden umfassenden Faserstruktur mittels einer flüssigen Verfestigungszusammensetzung, welche einen Vorläufer eines Verfestigungsmaterials enthält, und Umwandlung des Vorläufers durch Pyrolyse in Verfestigungsmaterial verfestigt wird, um einen verfestigten, in Form gehaltenen Vorformling zu erhalten, und des
- Verdichtens des verfestigten Faservorformlings durch chemische Gasphaseninfiltration,
**dadurch gekennzeichnet, dass** die Faserstruktur eine Vielzahl von Fäden umfasst, wobei jeder Faden von einer Vielzahl von Fasern oder Filamenten gebildet ist, zwischen denen Räume innerhalb der Fäden vorhanden sind, und dass das Verfahren vor der Imprägnierung der Faserstruktur mit der flüssigen Verfestigungszusammensetzung einen Schritt zum Auffüllen der Räume innerhalb der Fäden in der Struktur mittels einer flüssigen Auffüllzusammensetzung umfasst, wobei die flüssige Auffüllzusammensetzung vor dem Schritt des Verdichtens des Faservorformlings durch chemische Gasphaseninfiltration entfernt wird.

2. Verfahren nach Anspruch 1, **dadurch gekennzeichnet, dass** die flüssige Auffüllzusammensetzung ein flüchtiges Harz umfasst.

3. Verfahren nach Anspruch 2, **dadurch gekennzeichnet, dass** das flüchtige Harz mit der flüssigen Verfestigungszusammensetzung nicht mischbar ist.

4. Verfahren nach Anspruch 2 oder 3, **dadurch gekennzeichnet, dass** das flüchtige Harz aus Silikonölen, einem Polyvinylacetat und thermoplastischen Harzen ausgewählt ist.

5. Verfahren nach einem der Ansprüche 1 bis 4, **dadurch gekennzeichnet, dass** der Vorformling aus einer Faserstruktur aus Kohlenstoff- oder Keramikfasern hergestellt ist und dass der Verfestigungsmaterialvorläufer der flüssigen Verfestigungszusammensetzung ein Harz ist, das aus den Kohlenstoffvorläuferharzen und den Keramikvorläuferharzen ausgewählt ist.

6. Verfahren nach Anspruch 1, **dadurch gekennzeichnet, dass** der Faservorformling aus einer Faserstruktur aus Keramikfasern hergestellt ist und dass die flüssige Auffüllzusammensetzung ein Kohlenstoffvorläuferharz umfasst, wobei der Vorformling nach der Pyrolyse oxidiert wird, um den Koks aus dem Kohlenstoffvorläuferharz zu entfernen.

7. Verfahren nach Anspruch 6, **dadurch gekennzeichnet, dass** der Verfestigungsmaterialvorläufer der flüssigen Verfestigungszusammensetzung ein Keramikvorläuferharz ist.

8. Verfahren nach Anspruch 7, **dadurch gekennzeichnet, dass** das Keramikvorläuferharz der flüssigen Verfestigungszusammensetzung ein Harz ist, das aus Polycarbosilazanharz, Polycarbosilanharz und Polysiloxanharz ausgewählt ist.

9. Verfahren nach einem der Ansprüche 6 bis 8, **dadurch gekennzeichnet, dass** es vor der Imprägnierung der Faserstruktur mit der flüssigen Verfestigungszusammensetzung einen Schritt einer Polymerisation des Kohlenstoffvorläuferharzes umfasst.

## Claims

1. A method of fabricating a composite material part comprising fiber reinforcement densified by a matrix, said method comprising the steps of:
- making a fiber preform consolidated by impregnating a fiber texture made up of yarns with a liquid consolidation composition containing a precursor for a consolidating material, and by transforming the precursor into consolidating material by pyrolysis so as to obtain a consolidated preform that is held in shape; and
- densifying the consolidated fiber preform by chemical vapor infiltration;
the method being **characterized in that** the fiber structure comprises a plurality of yarns, each yarn being constituted by a plurality of fibers or filaments with intra-yarn spaces between them, and **in that** said method includes, prior to impregnation of the fiber texture with the consolidation liquid composition, a step of filling the intra-yarn spaces in said fiber texture by means of a liquid filler composition, said liquid filler composition being eliminated prior to the step of densifying the fiber preform by chemical vapor infiltration.

2. A method according to claim 1, **characterized in that** the filler liquid composition contains a sacrificial resin.

3. A method according to claim 2, **characterized in that** the sacrificial resin is not miscible with the filler liquid composition.

4. A method according to claim 2 or claim 3, **characterized in that** the sacrificial resin is selected from silicone oils, polyvinyl acetate, and thermoplastic resins.

5. A method according to any one of claims 1 to 4, **characterized in that** the preform is made from a carbon or ceramic fiber texture and **in that** the consolidating material precursor of the consolidation liquid composition is a resin selected from carbon-precursor resins and ceramic-precursor resins.

6. A method according to claim 1, **characterized in that** the fiber preform is made from a ceramic fiber texture and **in that** the filler liquid composition contains a carbon-precursor resin, said preform being oxidized after pyrolysis to eliminate the coke of the carbon-precursor resin.

7. A method according to claim 6, **characterized in that** the consolidating material precursor of the consolidation liquid composition is a ceramic-precursor resin.

8. A method according to claim 7, **characterized in that** the ceramic-precursor resin of the consolidation liquid composition is a resin selected from polycarbosilazane resin, polycarbosilane resin, and polysiloxane resin.

9. A method according to any one of claims 6 to 8, **characterized in that** it includes, prior to impregnating the fiber texture with the consolidation liquid composition, a step of polymerizing the carbon-precursor resin.
